# EUROPEAN PATENT APPLICATION

(11) **EP 4 810 217 A1**
(43) Date of publication of application: **23.09.2026**
(21) Application number: 25164756.6
(22) Date of filing: 19.03.2025
(51) Int. Cl.: B29B 17/00, B29B 17/04, B09B 3/27, B29L 31/00, B09B 101/85

(54) **RECYCLED TEXTILE TILE UNIT**

(71) Applicant: Saint-Gobain Ecophon AB, 265 03 Hyllinge (SE)
(72) Inventor: HOOSHMAND, Saleh, 254 73 Ödåkra (SE); CHIGOT, Pierre, 101 Reykjavik (IS)
(74) Representative: AWA Sweden AB

(57) **Abstract**

The present disclosure relates to a method for recycling textile fibre material, the method comprising: fragmentising the textile fibre material for obtaining a fragmentised textile fibre material; wetting the fragmentised textile fibre material with a binder agent in the form of an aqueous solution comprising sodium silicate for obtaining a wetted textile fibre material; moulding the wetted textile fibre material into a tile shaped element; and curing the tile shaped element for obtaining a cured tile shaped element comprising textile fibre material in an amount of at most 80 weight%.

## Description

### Field of the invention

The present disclosure relates to methods of recycling textile fibre material.

### Background art

Today, textile material is not recycled to a satisfying extent, as most of the material goes to landfills or incineration. One of the main challenges in the recycling of textile waste is that, usually, the textile is a mix of different types of fibers or yarn such as natural, for example cotton, wool, or silk, or synthetic fibers, for example Viscose, Lyocell, or Polyesters. Moreover, it might contain dyes, fire retardants or other additives, making such material unsuitable for a variety of applications.

Some efforts have been made to recycle such materials, such as transforming them into garments and shoes. However, well known challenges, such as poor fire properties of textile waste, tend to limit the potential applications, especially in construction.

Thus, there is a need for an improved method of recycling textile fibre material.

### Summary of the invention

To achieve at least the above object and also other objects that will be evident from the following description, a method having the features defined in claim 1 is provided according to the present disclosure. Preferred embodiments will be evident from the dependent claims.

More specifically, there is provided according to a first aspect of the present disclosure a method for recycling textile fibre material, the method comprising: fragmentising the textile fibre material for obtaining a fragmentised textile fibre material, wetting the fragmentised textile fibre material with a binder agent in the form of an aqueous solution comprising sodium silicate for obtaining a wetted textile fibre material, moulding the wetted textile fibre material into a tile shaped element, and curing the tile shaped element for obtaining a cured tile shaped element comprising textile fibre material in an amount of at most 80 weight%.

That is, the method provides for recycling of textile fibre material into tile shaped elements which may, in turn, be used in further applications, such as acoustic elements, i.e. to be used as acoustic panels. Hereby, an improved method for recycling textile fibre material is provided enabling reusage of textile fibre material in new products.

Further, since the tile shaped element provided by the method is bonded by a binder agent comprising sodium silicate, a more fire resistant tile shaped element is provided. This is especially beneficial if the tile shaped element is to be utilized in construction, such as an acoustic element.

Textile fibre material may be obtained in any form. For example, the textile fibre material may be obtained in the form of clothing, or domestic products such as rugs or furniture components.

Preferably, the textile fibre material is obtained in the form of textile waste. Hereby, an environmentally friendly method is provided.

Examples of textile waste include both pre-consumer waste, such as that generated in production sites, such as scraps, or damage/defective materials, and post-consumer waste, such as clothing discarded after consumption.

Fragmentising of the textile fibre material may be carried out by means of for instance a shredding device, a cutting device, a hammer mill device or the like. It is also conceivable to use a combination of devices for the fragmentising of the textile fibre material, such as fragmentising by means of a shredding device and followed by fragmentising by means of a hammer mill device.

The method may further comprise subjecting the fragmentised textile fibre material to a fibre separation operation.

That is, the fragmentised textile fibre material may be processed such that individual fibres are separated from each other, i.e. carded. Hereby, the fibers of the fragmentised textile fibre material may be aligned in a more uniform, parallel structure with improved consistency.

The method may further comprise subjecting the fragmentised textile fibre material to a size separation operation.

Size separation may, e.g., include sieving, and/or electrostatic separation, and/or flotation, and/or sedimentation. That is, a size separation operation may be a gravity assisted operation separating the fragmentised textile fibre material into one or more fractions based on density.

The fragmentised textile fibre material may have an average fragment size in the range of 5x1x0.1 - 50x10x2 mm. That is, an average fragment may have a length in the range of 5 - 50 mm, a width of 1 - 10 mm, and a depth, which may also be referred to as thickness, of 0.1 - 2 mm.

The fragmentised textile fibre material may be combined with any other type of fibre material in order to alter any property of the provided tile shaped element. For example, the fragmentised textile fibre material may be combined with further fibre material in order to improve the strength, resilience, and/or fire resistance, and/or chemical resistance of the tile shaped element.

The method may further comprising mixing the fragmentised textile fibre material with mineral wool material.

Mineral wool material may include stone wool, glass wool, or a mixture thereof.

Hereby, the fire resistant properties of the tile shaped element is further improved.

Mineral wool material may, for example, be mixed with the fragmentised textile fibre material to such an extent that mineral wool material is present in the cured tile shaped element in an amount of at most 2 weight%, or at most 4 weight%, or at most 6 weight%, or at most 8 weight%, or at most 10 weight%, or at most 12 weight%, or at most 14 weight%.

Additional to the cured tile shaped element comprising textile fibre material in an amount of at most 80 weight%, the fragmentised textile fibre material may wetted during the step of wetting the fragmentised textile fibre material to such an extent that the residual of the binder agent is present in the cured tile shaped element in an amount of 15-30 weight%. That is, a cured binder comprising sodium silicate may be present in the cured tile shaped element in an amount 15-30 weight%.

The binder agent may have any concentration of sodium silicate. For example, the aqueous solution may be provided with a sodium silicate concentration of at least 20 weight%. Additionally or alternatively, the aqueous solution may be provided with a sodium silicate concentration of at most 40 weight%.

It is to be understood that sodium silicate may be provided in any form. That is, sodium silicate having the chemical formula Na_{2y}Si_{y}O_{2y+x} is provided. In other words, the aqueous solution may for example comprise sodium metasilicate, Na₂SiO₃, and/or sodium orthosilicate Na₄SiO₄, and/or sodium pyrosilicate Na₆Si₂O₇. Preferably, the sodium silicate is predominantly, alternatively exclusively, sodium metasilicate, Na₂SiO₃.

The fragmentised textile fibre material may be mixed with further compounds, additives or fibre materials.

For example, the method may further comprise mixing the fragmentised textile fibre material with a fire retardant.

Hereby, the cured tile shaped element may be provided with fire-retardant properties.

A fire retardant may be mixed with the fragmentised textile fibre material such that the fire retardant is present in the cured tile shaped element in an amount of 2-30 weight%. The cured tile shaped element may, in some examples, be provided with fire-retardant properties to the extent that fire class B is achieved according to the standard EN 13501-1.

A fire retardant may be chosen from the group consisting of aluminium trihydroxide (ATH), magnesium hydroxide (MGH) and milled mineral wool.

In some examples, milled mineral wool may be obtained from recycled mineral wool material.

The step of wetting the fragmentised textile fibre material may be carried out in a wetting operation comprising immersion, spraying and/or tumbling.

The step of wetting the fragmentised textile fibre material may comprise a sub step of removing excess binder agent from the wetted textile fibre material.

The sub step of removing excess binder agent from the wetted textile fibre material may be carried out in a drying operation comprising draining, pressing, centrifugation, vacuum and/or heating. That is, any one of, or any combination of, the aforementioned operations may be used.

The step of moulding the wetted textile fibre material may comprise compacting the wetted textile fibre material such that the tile shape element obtains a density after curing in the range of 90 - 400 kg/m³.

Curing the tiled shaped element may be performed in a variety of ways and in a variety of conditions. Curing the tiled shaped element may be performed under applied pressure, and/or under applied air draft, and/or under heating. Heat may be applied in a variety of ways, e.g. by convection and/or radiation. Further, curing may be performed at any suitable temperature. For example. the step of curing the tile shaped element may be performed at a temperature in the range of 20 - 80°C.

Hereby, the efficiency of curing the tile shaped element is further improved.

The step of curing the tile shaped element may performed in a CO₂ enriched environment.

Since sodium silicate absorbs and reacts with CO₂ in order to form solid silica gel, by letting the tile shaped element cure in a CO₂ enriched environment, the mechanical strength of the resulting cured tile shaped element is improved.

The concentration of CO₂ in the CO₂ enriched environment may in some examples be 10-100%. Generally, by providing a higher concentration of CO₂, the reaction is accelerated.

CO₂ may be provided to the cured tile shaped element in a variety of ways. For example, CO₂ may be sourced from gas furnaces or ovens.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present disclosure, will be better understood through the following illustrative and non-limiting detailed description of variants of the present disclosure, with reference to the appended drawings, where the same reference numerals will be used for similar elements, wherein:
Fig. 1 is a schematic view of an exemplary method according to the present disclosure;
Fig. 2 is a schematic view of another exemplary method according to the present disclosure;
Fig. 3 is a schematic view of yet another exemplary method according to the present disclosure; and
Fig. 4 is a flow chart of an exemplary method according to the present disclosure.

### Description of embodiments

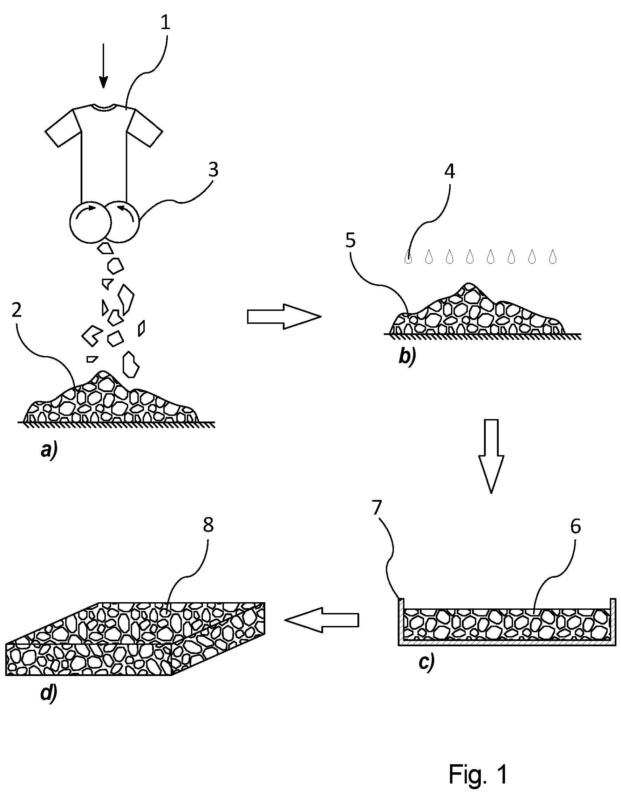

The present invention will now be described more fully hereinafter with reference to the accompanying drawings, in which currently preferred examples of the invention are shown. This invention may, however, be embodied in many different forms and should not be construed as limited to the examples set forth herein; rather, these examples are provided for thoroughness and completeness, and fully convey the scope of the invention to the skilled person. Specifically, in Figs. 1-4, exemplary methods according to the present invention are shown. It is to be understood that any step illustrated and discussed in relation to any one figure may be combinable with any step or steps illustrated and discussed in relation to any other figure.

It will be appreciated that the present invention is not limited to the examples shown. Several modifications and variations are thus conceivable within the scope of the invention which thus is exclusively defined by the appended claims.

In Fig.1, an exemplary method for recycling textile fibre material is shown. As is illustrated in step a), the textile fibre material 1 is fragmentised for obtaining a fragmentised textile fibre material 2. Here, the textile fibre material 1 is provided in the form of clothing. However, it is to be understood that a textile fibre material 1 may be provided in any form. For example, the textile fibre material 1 may be obtained in the form of domestic products such as rugs or furniture components. Preferably, the textile fibre material 1 is obtained in the form of textile waste. Hereby, an environmentally friendly method is provided. Examples of textile waste include both pre-consumer waste, such as that generated in production sites, such as scraps, or damage/defective materials, and post-consumer waste, such as clothing discarded after consumption.

Fragmentising of the textile fibre material 1 is in Fig. 1 schematically illustrated as being performed by a mill 3. A mill 3 may be any type of device configured for fragmentation of material, for instance a shredding device, a cutting device, a hammer mill device or the like. It is also conceivable to use a combination of devices for the fragmentising of the textile fibre material 1, such as fragmentising by means of a shredding device and followed by fragmentising by means of a hammer mill device.

The fragmentised textile fibre material 2 may comprise fragments of any size, or distribution of sizes. For example, the fragmentised textile fibre material 2 may have an average fragment size in the range of 5x1x0.1 - 50x10x2 mm. That is, an average fragment may have a length in the range of 5 - 50 mm, a width of 1 - 10 mm, and a depth, which may also be referred to as thickness, of 0.1 - 2 mm.

Although not shown in Fig. 1, the method may further comprise subjecting the fragmentised textile fibre material 2 to a size separation operation. Size separation may, e.g., include sieving, and/or electrostatic separation, and/or flotation, and/or sedimentation. That is, a size separation operation may be a gravity assisted operation separating the fragmentised textile fibre material into one or more fractions based on density.

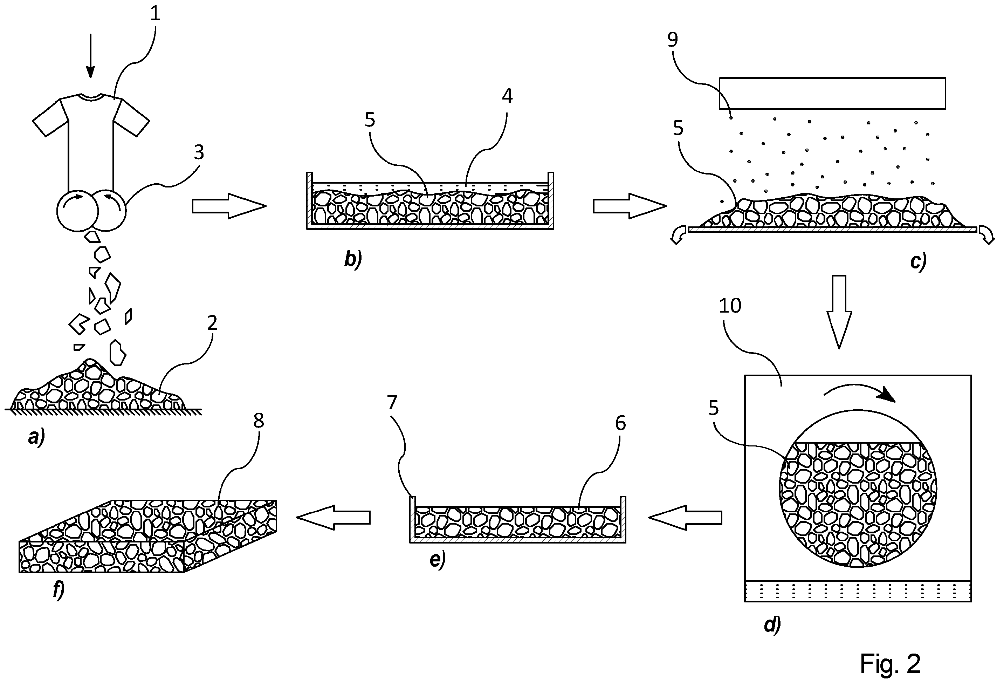

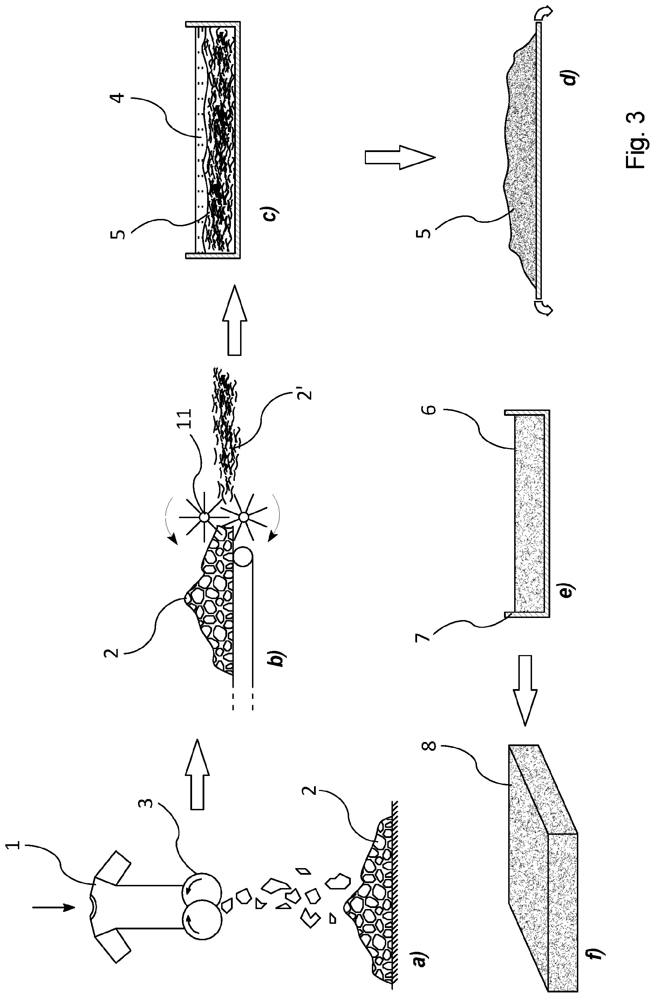

The fragmentised textile fibre material 2 is wetted with a binder agent 4, as shown in step b). Here, the fragmentised textile fibre material 2 is wetted by spraying the binder agent 4. However, the fragmentised textile fibre material 2 may be wetted in a variety of ways, for example by immersion, as will later be explained in relation to Figs. 2 and 3.

The binder agent 4 is provided in the form of an aqueous solution comprising sodium silicate. The binder agent may have any concentration of sodium silicate. For example, the aqueous solution may be provided with a sodium silicate concentration of at least 20 weight%. Additionally or alternatively, the aqueous solution may be provided with a sodium silicate concentration of at most 40 weight%. It is to be understood that sodium silicate may be provided in any form. That is, sodium silicate having the chemical formula Na_{2y}Si_{y}O_{2y+x} is provided. In other words, the aqueous solution may for example comprise sodium metasilicate, Na₂SiO₃, and/or sodium orthosilicate Na₄SiO₄, and/or sodium pyrosilicate Na₆Si₂O₇.

By wetting the fragmentised textile fibre material 2, a wetted textile fibre material 5 is provided. The wetted textile fibre material 5 is subsequently moulded into a tile shaped element 6, as is shown in step c). Here, the wetted textile fibre material 5 is moulded by the arrangement thereof in a mould 7 having rectangular dimensions. However, a mould 7 of any shape or dimension may be used, depending on the desired shape and dimension of the tile shaped element 6. Further, the tile shaped element 6 is cured. Curing the tiled shaped element 6 may be performed in a variety of ways and in a variety of conditions. Curing the tiled shaped element 6 may be performed under applied pressure, and/or under applied air draft, and/or under heating. Heat may be applied in a variety of ways, e.g. by convection and/or radiation. Further, curing may be performed at any suitable temperature. For example. the step of curing the tile shaped element may be performed at a temperature in the range of 20 - 80°C. The step of curing the tile shaped element may performed in an CO₂ enriched environment. The step of moulding the wetted textile fibre material 5 may comprise compacting the wetted textile fibre material 5 such that the tile shape element 6 obtains a density after curing in the range of 90 - 400 kg/m³.

After curing the tile shaped element 6, a cured tile shaped element 8 is provided, as is shown in step d). The cured tile shaped element 8 comprises textile fibre material in an amount of at most 80 weight%. Additionally, the fragmentised textile fibre material 2 is wetted to such an extent that the residual of the binder agent 4 is present in the cured tile shaped element 8 in an amount of 15-30 weight%. That is, a cured binder comprising sodium silicate is present in the cured tile shaped element 8 in an amount 15-30 weight%.

In Fig. 2, another exemplary method is shown. Here, step a), i.e. the step of fragmentising textile fibre material 1, is identical to that described in relation to Fig. 1. In Fig. 2, however, an alternative way of wetting the fragmentised textile fibre material 2 is illustrated. Here, wetted textile fibre material 5 is obtained by immersing fragmentised textile fibre material 2 in binder agent 4.

Further, in Fig. 2, step c), excess binder agent 4 is removed from the wetted textile fibre material 5 in a drying operation. Here, excess binder agent 4 is removed through draining, which is indicated by the downwards pointing arrows on each side of the wetted textile fibre material 5. Further, in step c) of Fig. 2, milled mineral wool material 9 is added to the wetted textile fibre material 5. The milled mineral wool material 9 may, e.g., act as a fire retardant. Hereby, a more fire resistant cured tile shaped element 8 may be provided. The milled mineral wool material 9 may, for example, be obtained from recycled mineral wool material.

Other fire retardants may be added to the wetted textile fibre material 5. However, it is to be understood that a fire retardant, or any other additive, may be added at or during other steps of the method. A fire retardant may be chosen from the group consisting of aluminium trihydroxide (ATH), magnesium hydroxide (MGH). A fire retardant may, for example, be mixed with the fragmentised textile fibre material 2, or wetted textile fibre material 5. such that the fire retardant is present in the cured tile shaped element 8 in an amount of 2-30 weight%. The cured tile shaped element 8 may, in some examples, be provided with fire-retardant properties to the extent that fire class B is achieved according to the standard EN 13501-1.

In Fig. 2, a further step, d), of removing excess binder agent 4 is illustrated. Here, the mix of wetted textile fibre material 5 and milled mineral wool material 9 is arranged in a centrifuge 10, whereby excess binder agent 4 is removed through centrifugation.

Step e) in Fig. 2 corresponds to step c) in Fig. 2, and step f) in Fig. 2 corresponds to step d) in Fig. 1.

In Fig. 3, step b) illustrates an optional step of subjecting the fragmentised textile fibre material 2 to a fibre separation operation. Here, the fibre separation operation is performed by a carder 11. Hereby, the fragmentised fibre material 2 is subjected to carding, such that carded textile fibre material 2' is provided. The carded textile fibre material 2' is subsequently immersed in binder agent 4 for provision of wetted textile fibre material 5. The wetted textile fibre material 5 is subsequently dried in step d), moulded in step e) and provided as a cured tile shaped element 8 in step f), in accordance with what has been illustrated in and discussed in relation to Figs. 1-2.

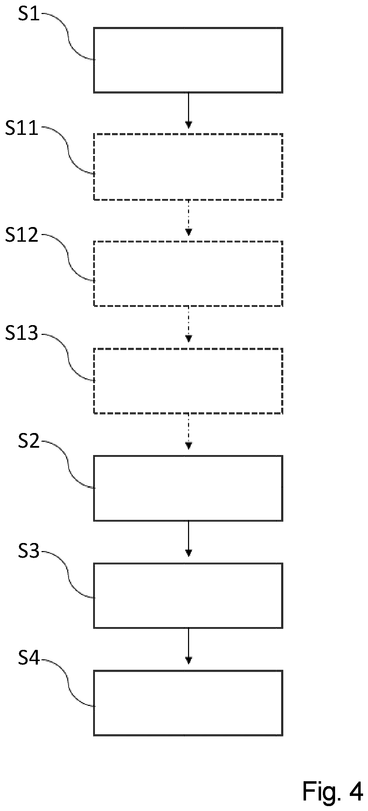

In Fig. 4, a flow chart illustrating an exemplary method according to the present disclosure is shown. First, fragmentising S1 textile fibre material 1 for obtaining a fragmentised textile fibre material 2 is performed. Fragmentising S1 of the textile fibre material 1 may be carried out by means of for instance a shredding device, a cutting device, a hammer mill device or the like. It is also conceivable to use a combination of devices for the fragmentising of the textile fibre material 1, such as fragmentising S1 by means of a shredding device and followed by fragmentising S1 by means of a hammer mill device.

In Fig. 4, the optional step of subjecting S11 the fragmentised textile fibre material 2 to a fibre separation operation, as was discussed in relation to Fig. 3, is performed.

Further, the optional step of adding S12 a fire retardant to the carded fragmentised textile fibre material 2' is performed . A fire retardant may be chosen from the group consisting of aluminium trihydroxide (ATH), magnesium hydroxide (MGH), or milled mineral wool, as was discussed in relation to Fig. 2.

Furthermore, an optional step of adding S13 mineral wool material to the carded fragmentised textile fibre material 2' is performed. Hereby, the fire resistant properties of the tile shaped element may further improved. Mineral wool material of any suitable form may be added, such as mineral wool fibres. For example, the mineral wool material may be added in the form of carded mineral wool fibres. Mineral wool fibres of any suitable fibre length may be provided. Mineral wool material may, for example, be mixed with the fragmentised textile fibre material 2, or the carded fragmentised textile fibre material 2', to such an extent that mineral wool material is present in the cured tile shaped element in an amount of at most 2 weight%, or at most 4 weight%, or at most 6 weight%, or at most 8 weight% or at most 10 weight%, or at most 12 weight%, or at most 14 weight%. It should be noted that mineral wool material, similar to milled mineral wool material, may be obtained from recycled mineral wool material.

Wetting S2 the fragmentised textile fibre material 2, 2' with a binder agent 4 in the form of an aqueous solution comprising sodium silicate for obtaining a wetted textile fibre material is performed. By wetting the fragmentised textile fibre material 2, a wetted textile fibre material 5 is provided. The binder agent 4 is provided in the form of an aqueous solution comprising sodium silicate. The binder agent 4 may have any concentration of sodium silicate. For example, the aqueous solution may be provided with a sodium silicate concentration of at least 20 weight%. Additionally or alternatively, the aqueous solution may be provided with a sodium silicate concentration of at most 40 weight%. It is to be understood that sodium silicate may be provided in any form. That is, sodium silicate having the chemical formula Na_{2y}Si_{y}O_{2y+x} is provided. In other words, the aqueous solution may for example comprise sodium metasilicate, Na₂SiO₃, and/or sodium orthosilicate Na₄SiO₄, and/or sodium pyrosilicate Na₆Si₂O₇.

The step of wetting S2 the fragmentised textile fibre material may be carried out in any type of wetting operation, for example comprising immersion, spraying and/or tumbling. The step of wetting S2 the fragmentised textile fibre material 2, 2' may further comprise a sub step of removing excess binder agent 4 from the wetted textile fibre material 5. The sub step of removing excess binder agent 4 from the wetted textile fibre material 5 may be carried out in a drying operation comprising draining, pressing, centrifugation, vacuum and/or heating. That is, any one of, or any combination of, the aforementioned operations may be used.

Moulding S3 the wetted textile fibre material into a tile shaped element 6 is performed. The step of moulding S3 the wetted textile fibre material 5 may comprise compacting the wetted textile fibre material 5 such that the tile shape element 6 obtains a density after curing in the range of 90 - 400 kg/m³.

Curing S4 the tile shaped element 6 for obtaining a cured tile shaped element 8 is performed. The cured tile shaped element 8 comprises textile fibre material in an amount of at most 80 weight%. Curing S4 the tiled shaped element may be performed in a variety of ways and in a variety of conditions. Curing S4 the tiled shaped element may be performed under applied pressure, and/or under applied air draft, and/or under heating. Heat may be applied in a variety of ways, e.g. by convection and/or radiation. Further, curing S4 may be performed at any suitable temperature. For example. the step of curing S4 the tile shaped element 6 may be performed at a temperature in the range of 20 - 80°C. The step of curing S4 the tile shaped element 6 may performed in an CO₂ enriched environment.

It is to be understood that any one of the aforementioned optional steps S11, S12, S13 may be performed before, during or after other steps of the method. For example, adding S12 a fire retardant may be performed before subjecting S11 the fragmentised textile fibre material 2 to a separation operation. As another example, adding S13 mineral wool material may be performed after wetting S2 or removing excess binder agent 4, and before moulding S3.

## Claims

1. A method for recycling textile fibre material, the method comprising:
fragmentising the textile fibre material for obtaining a fragmentised textile fibre material;
wetting the fragmentised textile fibre material with a binder agent in the form of an aqueous solution comprising sodium silicate for obtaining a wetted textile fibre material;
moulding the wetted textile fibre material into a tile shaped element; and
curing the tile shaped element for obtaining a cured tile shaped element comprising textile fibre material in an amount of at most 80 weight%.

2. The method according to claim 1, wherein the step of wetting the fragmentised textile fibre material comprises a sub step of removing excess binder agent from the wetted textile fibre material.

3. The method according to claim 2, wherein the sub step of removing excess binder agent from the wetted textile fibre material is carried out in a drying operation comprising draining, pressing, centrifugation, vacuum and/or heating.

4. The method according to claim any one of the preceding claims, wherein the aqueous solution is provided with a sodium silicate concentration of at least 20 weight%.

5. The method according to any one of the preceding claims, wherein the aqueous solution is provided with a sodium silicate concentration of at most 40 weight%.

6. The method according to any one of the preceding claims, further comprising mixing the fragmentised textile fibre material with a fire retardant.

7. The method according to claim 6, wherein the fire retardant is chosen from the group consisting of aluminium trihydroxide (ATH), magnesium hydroxide (MGH) and milled mineral wool.

8. The method according to claim 7, wherein the milled mineral wool is obtained from recycled mineral wool material.

9. The method according to any one of the preceding claims, further comprising mixing the fragmentised textile fibre material with mineral wool material.

10. The method according to any one of the preceding claims, wherein the textile fibre material is obtained in the form of textile waste.

11. The method according to any one of the preceding claims, wherein the step of wetting the fragmentised textile fibre material is carried out in a wetting operation comprising immersion, spraying and/or tumbling.

12. The method according to any one of the preceding claims, wherein the step of moulding the wetted textile fibre material comprises compacting the wetted textile fibre material such that the tile shape element obtains a density after curing in the range of 90 - 400 kg/m³.

13. The method according to any one of the preceding claims, wherein the step of curing the tile shaped element is performed at a temperature in the range of 20 - 80°C.

14. The method according to any one of the preceding claims, wherein the step of curing the tile shaped element is performed in an CO₂ enriched environment.

15. The method according to any one of the preceding claims, further comprising subjecting the fragmentised textile fibre material to a fibre separation operation.
